# EUROPÄISCHE PATENTSCHRIFT

(11) **EP 1 855 093 B1**
(45) Veröffentlichungstag und Bekanntmachung des Hinweises auf die Patenterteilung: **26.05.2010**
(21) Anmeldenummer: 07104834.2
(22) Anmeldetag: 23.03.2007
(51) Int. Cl.: G01H 13/00, G01S 7/52, G01S 15/93, G10K 9/122, B06B 1/06

(54) **Verfahren zum Einstellen der Resonanzfrequenz eines Schwingungsabschnitts für einen Sensor**
Method for adjusting the resonance frequency of an oscillation section for a sensor
Procédé de réglage de la fréquence de résonance d'une section d'oscillation pour un capteur

(30) Priorität: 09.05.2006 DE 102006021492
(43) Veröffentlichungstag der Anmeldung: 14.11.2007
(73) Patentinhaber: ROBERT BOSCH GMBH, 70442 Stuttgart (DE)
(72) Erfinder: Rapps, Peter, 76227, Karlsruhe (DE); Hartig, Oliver, 71229, Leonberg (DE)

(56) Entgegenhaltungen:
- DE-A1- 2 551 943
- DE-A1- 10 139 341
- DE-B- 1 115 470
- DE-B- 1 208 608
- US-A- 4 941 202

## Beschreibung

### Stand der Technik

Die vorliegende Erfindung betrifft ein Verfahren zum Einstellen der Resonanzfrequenz eines Schwingungsabschnitts eines Sensors, insbesondere eines Ultraschallsensors, ein entsprechendes Gehäuse, und eine entsprechende Vorrichtung.

Derartige Ultraschallsensoren werden zum Beispiel bei Kraftfahrzeugen als Einparkhilfe eingesetzt und weisen jeweils ein Gehäuse auf, das als fließgepressten Aluminiumtopf ausgebildet ist bzw. aus einer Aluminiumlegierung besteht. Das Gehäuse weist einen Schwingungsabschnitt bzw. eine Membran auf, welcher für Ultraschallschwingungen geeignet ist. Das Gehäuse wird auch als so genannter Membrantopf bezeichnet. Dieser wird bei Betrieb des Ultraschallsensors auf seiner Resonanzfrequenz bei Aussendung bzw. Empfang eines Signals angeregt. Die Anregung des Schwingungsabschnitts zum Schwingen wird durch ein Wandlerelement erzeugt, das zum Beispiel ein Piezowandlerelement ist, welches auf dem inneren Boden des Membrantopfs aufgeklebt ist. Der gesamte Membrantopf einschließlich Piezoelement ist aus Dämpfungsgründen zum Beispiel mit einem geeigneten Material vergossen. Der Ultraschallsensor wird an Fahrzeugen beispielsweise in den Stoßfängern so eingebaut, dass die Außenseite des Bodens des Gehäuses, also der Schwingungsabschnitt, freiliegt, wodurch Abstandsmessungen zu Objekten vor und hinter dem Fahrzeug und auch zum Teil zur Seite hin ermöglicht sind.

Für eine korrekte Funktion eines solchen Ultraschallsensors ist es entscheidend, dass das Gehäuse bzw. der Membrantopf auf seiner Eigenresonanz bzw. seiner Resonanzfrequenz betrieben wird. Diese liegt in einem definierten Bereich, typischerweise im Bereich von 48 kHz für den fertigen Sensor, mit einer bestimmten zulässigen Toleranz von beispielsweise +2 kHz und -1,5 kHz. Da der Einbauort des Ultraschallsensors an einem Fahrzeug im Sichtbereich und Außenbereich liegt, gibt es einerseits kundenseitig Forderungen nach einer optischen Angleichung an den Einbauort und andererseits Forderungen nach einem bestimmten Korrosionsschutz. Diesen Anforderungen wird üblicherweise durch eine entsprechende Beschichtung der Außenseite des Ultraschallsensors nachgekommen. In Abhängigkeit von dieser Beschichtung wird jedoch die Resonanzfrequenz des Membrantopfs so verändert, dass zum Beispiel eine galvanische Beschichtung von ca. 80 µm die Resonanzfrequenz des Membrantopfs um ca. 6...7 kHz erhöht, wobei ein zulässiger Toleranzbereich von zum Beispiel 48 + 2 kHz um 4 bis 5 kHz überschritten wird. Hierbei ist die Schwingungsfrequenz proportional zur Gesamtschichtdicke des Schwingungsabschnitts und der aufgebrachten Schicht(en). Solche Beschichtungen sind beispielsweise aus Kupfer, Halbglanznickel, Glanznickel und Chrom. Deshalb beeinflusst jede Schichtdickenschwankung während der Beschichtung die resultierende Resonanzfrequenz des Membrantopfs. Beschichtete Membrantöpfe, die außerhalb der zulässigen Toleranz der Resonanzfrequenz liegen, müssen verworfen werden.

Die DE 101 39 341 A1 zeigt ein Beispiel eines Ultraschallsensors, dessen Membrandicke so eingestellt ist, dass eine Änderung der Vibrationscharakteristik wirksam beschränkt wird, auch wenn auf der Sensormembran Wassertropfen haften bleiben. Dieses wird durch ein bestimmtes Verhältnis von unterschiedlich dicken Bereichen der Membran erreicht. Ein Hinweis auf beschichtete Membrantöpfe wird nicht gegeben.

Aus der US 4,941,202 ist eine "Transducer-Einheit" insbesondere für ein Unterwasser-Kommunikationssystem bekannt. Im Inneren des Gehäuses sind piezoelektrische Stacks zum Senden und zum Empfangen von Schallsignalen angeordnet. Die Wände des Gehäuses können an eine Frequenz der Piezo-Stacks angepasst werden.

### Offenbarung der Erfindung

Das erfindungsgemäße Verfahren zum Einstellen der Resonanzfrequenz eines Schwingungsabschnitts eines Sensors, insbesondere eines Ultraschallsensors, weist demgegenüber den Vorteil auf, dass beschichtete Membrantöpfe mit einer Resonanzfrequenz außerhalb der zulässigen Toleranz nachträglich so bearbeitet werden, dass der bisherige Ausschuss reduziert wird. Ein weiterer Vorteil besteht darin, dass diese Bearbeitung auch für unbeschichtete Membrantöpfe möglich ist und somit besonders wirtschaftlich ist.

Der Kern der Erfindung besteht darin, dass die Dicke des Schwingungsabschnitts des Membrantopfs nach der Beschichtung verändert wird. Hierbei kommen jedoch nur die Bereiche in Frage, die außerhalb des Befestigungsbereiches des Wandlerelementes liegen. In diesen Bereichen ist die Auslenkung des Schwingungsabschnitts jedoch nur gering. Durch eine Modifikation der Dicke der Membran an diesen Stellen war deshalb mit keiner großen Beeinflussung der Resonanzfrequenz zu rechnen. Es hat sich jedoch gezeigt, dass sich durch eine Ausnehmung des Membrantopfs an diesen Stellen die Resonanzfrequenz signifikant ändert, indem sie sich verringert.

Gemäß der Erfindung weist ein Verfahren zum Einstellen der Resonanzfrequenz eines Schwingungsabschnitts eines Gehäuses eines Sensors, insbesondere eines Ultraschallsensors, folgende Verfahrensschritte auf:
(VS1) Messen der Resonanzfrequenz des Schwingungsabschnitts mit einer Messeinrichtung;
(VS2) Vergleichen der gemessenen Resonanzfrequenz mit einem vorher festgelegten Schwellwert einer Soll-Resonanzfrequenz; und
(VS3) Herstellen eines Werkstoffabtrags oder-auftrags an dem Schwingungsabschnitt anhand des Vergleichens zum Einstellen der Resonanzfrequenz des Schwingungsabschnitts.
Bei einer zu hohen gemessen Resonanzfrequenz wird an geeigneter Stelle an dem Schwingungsabschnitt ein Werkstoffabtrag vorgenommen, wodurch die Resonanzfrequenz des Schwingungsabschnitts erniedrigt wird. Bei einer zu niedrigen gemessenen Resonanzfrequenz kann diese durch Auftrag eines geeigneten Werkstoffs erhöht werden. Durch das Messen und Vergleichen mit einem Sollwert lässt sich eine genaue Einstellung der Resonanzfrequenz bei Membrantöpfen erreichen, die außerhalb der zulässigen Toleranz liegen.

Insbesondere ist es von Vorteil, wenn eine Bearbeitung des Schwingungsabschnitts innerhalb des Gehäuses vorgenommen wird, da in diesem Fall an der Außenseite des Gehäuses keine Bearbeitungsmerkmale zu sehen sind, denn die Außenseite des Gehäuses ist häufig ein Bestandteil einer Fahrzeugkarosserie, deren optischer Eindruck beibehalten werden soll.

Dieses ist vorteilhaft ebenfalls möglich, wenn der Schwingungsabschnitt des Gehäuses des Sensors an der Außenseite eine Beschichtung aufweist. Dadurch wird ein großer Einsatzbereich geschaffen.

Es ist bevorzugt, dass das Messen der Resonanzfrequenz mit einem mit einem Sender und einem Empfänger einer an dem Schwingungsabschnitt angebrachten Messeinrichtung erfolgt. Durch diese Anordnung und Anbringung wird vorteilhaft erreicht, dass ein Messfehler gering gehalten wird. Weiterhin ist nur ein geringer Aufwand erforderlich.

Alternativ ist vorgesehen, dass das Messen der Resonanzfrequenz mit einem Wandlerelement als Sender, das auf dem Schwingungsabschnitt vorübergehend aufgebracht oder auf dem Schwingungsabschnitt befestigt ist, und einem Empfänger einer an dem Schwingungsabschnitt vorübergehend angebrachten Messeinrichtung erfolgt. Hierbei ist es vorteilhaft, dass einerseits ein Wandlerelement an der Stelle angebracht werden kann, an welcher sich später beim fertigen Sensor sein eigenes Wandlerelement befindet und sich dadurch ein Messfehler reduziert, und dass andererseits das eigene Wandlerelement des Sensors bereits vorhanden ist und als Sender benutzt wird, wodurch sich ein Messfehler und Bauteileaufwand verringern.

Dabei ist vorgesehen, dass das Herstellen des Werkstoffabtrags oder -auftrags außerhalb eines Befestigungsbereichs eines Wandlerelementes erfolgt. Hieraus ergibt sich der besondere Vorteil, dass eine nachträgliche Bearbeitung auch bei schon befestigtem Wandlerelement erfolgen kann. So wird eine Resonanzfrequenz gemessen, die der Wirklichkeit mit eingebautem Wandlerelement exakt entspricht, wodurch sich eine Ausschusszahl weiter verringert.

In einer Ausführung ist vorgesehen, dass das Herstellen des Werkstoffabtrags oder - auftrags mit einem Werkzeug erfolgt, welches eine Verstellbewegung parallel zur Ebene des Schwingungsabschnitts in einer in Abhängigkeit von dem Vergleich zwischen Ist- und Soll-Resonanzfrequenz festlegbaren Form ausführt. Damit lässt sich mit nur einer Zustellung des Werkzeugs eine vorher festlegbare flächenförmige Ausnehmung bzw. Auftragung erreichen.

Der Werkstoffabtrag kann durch Fräsen, Laserätzen, und/oder Plasmaätzen ausgeführt werden. Ein Werkstoffabtrag durch Fräsen ist vorteilhaft, da dieser besonders einfach mit einem Fräswerkzeug ohne großen Aufwand durchführbar ist.

Für eine besonders hohe Genauigkeit ist das Laserätzen oder Plasmaätzen von Vorteil. Diese Verfahren sind bereits aus der Halbleitertechnik bekannt.

Bei Untersuchungen ist festgestellt worden, dass eine nahezu lineare Abhängigkeit der Resonanzfrequenz des Schwingungsabschnitts von dem Zustellweg des Werkzeugs existiert. Daher ist es besonders vorteilhaft, dass das jeweilige Werkzeug in Abhängigkeit von dem Vergleich zwischen Ist- und Soll-Resonanzfrequenz in einer Richtung zugestellt wird, die im Wesentlichen senkrecht zur Ebene des Schwingungsabschnitts liegt. Eine Ausnehmungstiefe kann dabei bis zu einem bestimmten Wert erfolgen, ohne dass eine Verbiegung des Schwingungsabschnitts durch diesen Abtragungsvorgang erfolgt, und ohne dass dieses von außen an der Membrane sichtbar ist. Eine solche maximale Tiefe liegt beispielsweise bei 0,25 mm.

In einer weiteren Ausführung ist vorgesehen, dass das Verfahren durch Wiederholen der Verfahrensschritte (VS1 bis VS3) in mehreren Stufen durchgeführt wird, wodurch sich die Genauigkeit des Einstellens der Resonanzfrequenz des Schwingungsabschnitts erhöht.

Ein Gehäuse, insbesondere Membrantopf, für einen Ultraschallsensor weist eine mittels des oben beschriebenen Verfahrens eingestellte Resonanzfrequenz eines Schwingungsabschnitts auf.

Das oben beschriebene Verfahren lässt sich mit einer erfindungsgemäßen Vorrichtung automatisch durchführen, wobei es sich vorteilhaft in eine Fertigungslinie von Sensoren integrieren, aber auch separat davon ausführen lässt.

Eine erfindungsgemäße Vorrichtung zur Einstellung der Resonanzfrequenz eines Schwingungsabschnitts eines Sensors, insbesondere eines Ultraschallsensors, ist durch Anspruch 13 definiert.

Durch die Regelungseinrichtung ist eine vorteilhaft automatische Durchführung des Verfahrens mit einer hohen Genauigkeit möglich.

Dabei ist vorgesehen, dass die Bearbeitungseinrichtung eine Einrichtung zur Abtragung von Werkstoff von dem Schwingungsabschnitt und/oder eine Einrichtung zur Auftragung eines Zusatzwerkstoffs auf den Schwingungsabschnitt aufweist. Dieses ist es vorteilhaft, da so eine direkte Zustellung der entsprechenden Werkzeuge ausführbar ist.

Ein auf dem Schwingungsabschnitt befestigtes Wandlerelement ist ein Bestandteil der Messeinrichtung und reduziert somit den Geräteaufwand. Die Anbringung reduziert vorteilhaft Messfehler. Dabei ist es besonders vorteilhaft, wenn das Wandlerelement das eigentliche Wandlerelement des Sensors ist.

Es ist bevorzugt, dass die Regelungseinrichtung Folgendes aufweist:
- eine Eingabeeinrichtung zur Eingabe von Werten;
- eine Vergleichseinrichtung zum Vergleich von gemessenen Werten der Resonanzfrequenz mit Werten einer Soll-Resonanzfrequenz;
- eine Speichereinrichtung für Sollwerte und vorgebbare Tabellenwerte; und
- eine erste Schnittstelle zur Verbindung mit der Bearbeitungseinrichtung.
In der Speichereinrichtung können außer den Sollwerten auch Tabellenwerte und Programme eingeschrieben sein, welche zur Steuerung der Form der Ausnehmung bzw. Auftragung abrufbar sind.
Diese Ausführung der Regelungseinrichtung ist vorteilhaft, da so eine kompakte und einfache Einrichtung für die Regelungsaufgabe geschaffen ist, wobei sie durch die erste Schnittstelle an verschiedene Bearbeitungseinrichtungen anpassbar ist.

Zur vorteilhaften Einbindung der Vorrichtung in eine Fertigungslinie oder übergeordnete Steuerung ist in einer weiteren Ausführung vorgesehen, dass die Regelungseinrichtung eine zweite Schnittstelle zur Integration der Vorrichtung in eine Fertigungslinie für Ultraschallsensoren aufweist. Damit wird erreicht, dass die Regelungseinrichtung in Verbindung mit der Bearbeitungs- und Messeinrichtung an verschiedene Fertigungsparameter anpassbar ist, wodurch ein größerer Einsatzbereich entsteht.

Weitere Vorteile und Merkmale der Erfindung sind der Beschreibung und den Zeichnungen entnehmbar.

### Zeichnungen

Die Erfindung wird nachfolgend anhand des in den Figuren der Zeichnung angegebenen Ausführungsbeispiels näher erläutert.

Es zeigt dabei:
FIG. 1 eine schematische Teilschnittdarstellung eines Ultraschallsensors;
FIG. 2 eine vergrößerte schematische Schnittdarstellung eines Schwingungsabschnitts;
FIG. 3 eine Draufsicht auf den Ultraschallsensor nach Fig. 2;
FIG. 4 eine grafische Darstellung des Zusammenhangs von Resonanzfrequenz und Tiefe einer Ausnehmung in einem Schwingungsabschnitt; und
FIG. 5 eine schematische Blockdarstellung eines Ausführungsbeispiels einer erfindungsgemäßen Vorrichtung;

### Beschreibung der Ausführungsbeispiele

Gleiche oder ähnliche Bauteile mit gleichen oder ähnlichen Funktionen sind in den Figuren mit gleichen Bezugszeichen versehen.

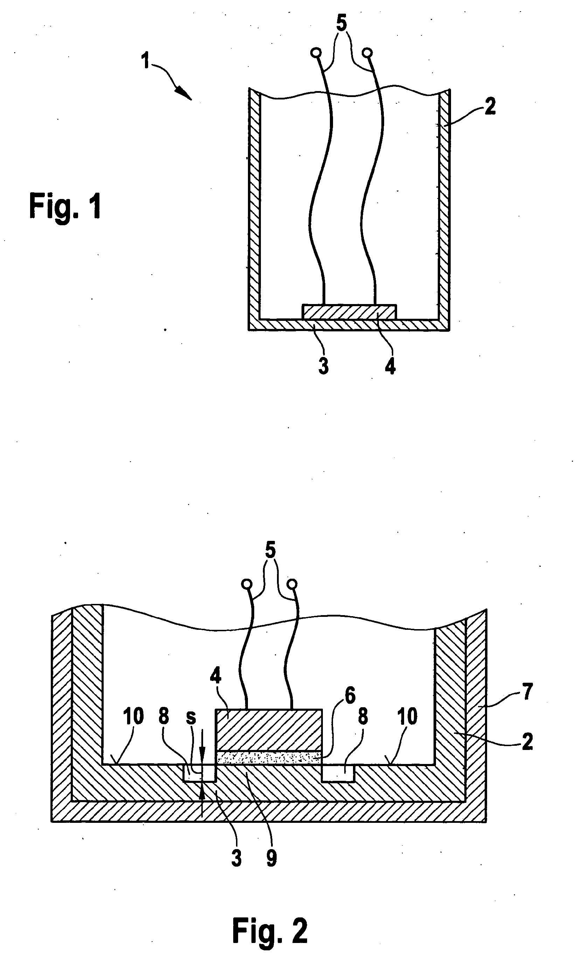

In Fig. 1 ist ein Sensor 1 in Ausführung eines Ultraschallsensors mit einem Wandlerelement 4 in einem Gehäuse 2 in einem Längsschnitt zum Teil dargestellt. Das Gehäuse 2 ist topfförmig ausgebildet und ist nach oben offen, wobei der obere Teil nicht gezeigt ist. Das untere Ende des Gehäuses 2 ist mit einem Boden verschlossen, welcher einen Schwingungsabschnitt 3 aufweist. Der Schwingungsabschnitt 3 ist der Teil des Bodens, welcher von der Wandung des Gehäuses 2 umgrenzt ist, nämlich sein freier Bereich innerhalb des Gehäuses und die diesem freien Bereich gegenüber liegende Außenseite. Auf diesem freien Bereich des Schwingungsabschnitts 3 innerhalb des Gehäuses 2 ist das Wandlerelement 4 fest aufgebracht, beispielsweise mittels eines geeigneten Klebers. Die Außenseite ist die aktive Fläche bei Einbau in beispielsweise einen Stoßfänger eines Fahrzeugs. Der Schwingungsabschnitt 3 wird auch als Membran bezeichnet. Das Wandlerelement 4 besitzt Anschlussleitungen 5 für Beaufschlagung mit elektrischer Energie zur Schallerzeugung im Sendebetrieb und zur Ableitung elektrischer Energie, die im Wandlerelement 4 durch mechanische Anregung durch den von Echosignalen im Empfangsbetrieb angeregten Schwingungsabschnitt 3 erzeugt wird. Das Gehäuse 2, das als Membrantopf bezeichnet wird, ist in diesem Beispiel vorzugsweise ein fließgepresster Aluminiumtopf.

Fig. 2 zeigt eine vergrößerte detailliertere Darstellung des unteren Bereichs des Gehäuses 2 in einem Teilschnitt, der oben abgebrochen ist. Das Gehäuse 2 weist außen eine Beschichtung 7 auf, welche beispielsweise einen Korrosionsschutz und/oder eine optische Anpassung an den Einbauort des Sensors 1 bildet. Diese Beschichtung 7 kann z.B. Kupfer, Halbglanznickel, Glanznickel und/oder Chrom aufweisen.

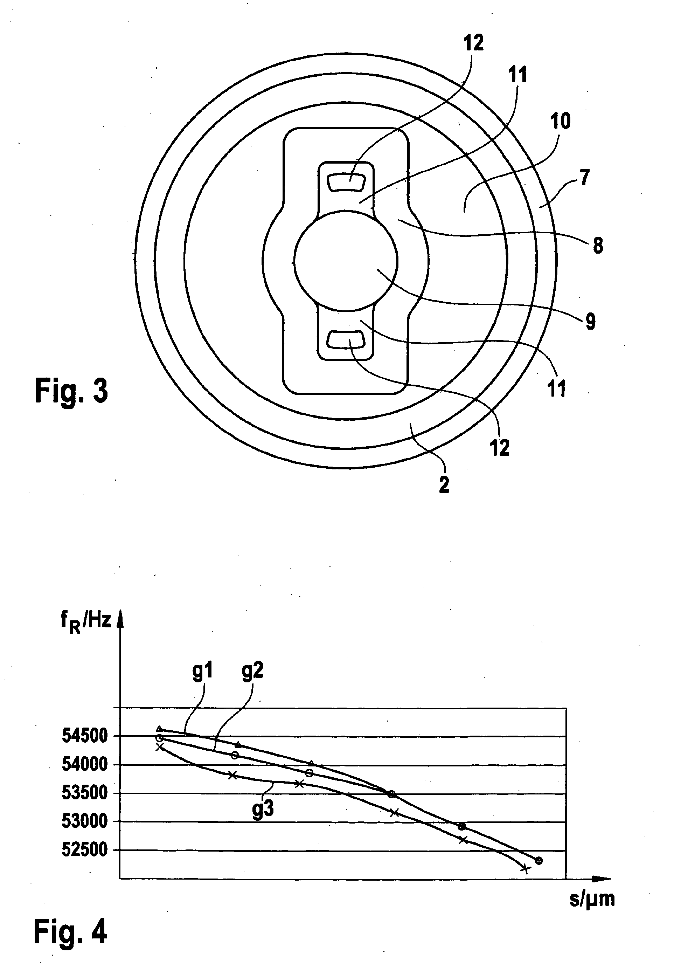

Der Schwingungsabschnitt 3 weist auf seiner Außenseite ebenfalls die Beschichtung 7 auf. Auf seiner Innenfläche 10 ist mittig das Wandlerelement 4 mittels einer Verbindung, vorzugsweise Klebverbindung, auf einem Befestigungsbereich 9 befestigt. Auf beiden Seiten des Befestigungsbereichs 9 ist eine Ausnehmung 8 mit einer Tiefe s angeordnet. Die Ausnehmung 8 ist um den Befestigungsbereich 9 herum in einer bestimmten geometrischen Form ausgebildet, die in der Fig. 3 in einer Draufsicht von oben in einer beispielhaften Kontur gezeigt ist, die sich aus zwei Kreisabschnitten und sechs länglichen Abschnitten zusammensetzt. Es sind selbstverständlich andere Formen möglich, wie beispielsweise Rechtecke, Vielecke oder mit Schlangenlinien geformte Bereiche, die den Befestigungsbereich 9 vollständig umschließen oder separat angeordnet sind. Die länglichen Abschnitte der Ausnehmung 8 umschließen einen ersten Ausnehmungsbereich 11, der beispielsweise eine unterschiedliche Tiefe zur Ausnehmung 8 aufweisen kann. In dem ersten Ausnehmungsbereich 11 sind zwei gegenüberliegende zweite Ausnehmungsbereiche 12 in Kreisabschnittsform eingebracht. Dieses dient als ein Beispiel zur Darstellung von unterschiedlichen Ausnehmungen 8, 11, 12, die entweder zusammen oder auch einzeln in die Innenfläche 10 des Schwingungsabschnitts 3 eingebracht sein können.

Das Gehäuse 2 besitzt durch geeignete Dimensionierung und Ausgestaltung eine Resonanzfrequenz f_{R}, welche im Ultraschallbereich liegt, beispielsweise 48 kHz. Durch das Wandlerelement 4, das mit dem Schwingungsabschnitt 3 verbunden ist, wird der Schwingungsabschnitt 3 zum Schwingen mit der Resonanzfrequenz f_{R} angeregt. Bei Resonanz ist die dabei zugeführte Energie am geringsten gedämpft und die abgestrahlte Energie am größten. Daher ist es notwendig die Resonanzfrequenz f_{R} des Schwingungsabschnitts 3 optimal einzustellen. Durch die Beschichtung 7 ist die Resonanzfrequenz f_{R} jedoch im Vergleich zum Zustand ohne Beschichtung 7 verändert. Zum Beispiel erhöht eine galvanische Beschichtung 7 mit einer Dicke von ca. 80 µm die Resonanzfrequenz f_{R} um ca. 6...7 kHz. Die Resonanzfrequenz f_{R} ist proportional zur Gesamtdicke des Schwingungsabschnitts 3 und der aufgebrachten Beschichtung 7.

Dementsprechend wird zum Absenken der Resonanzfrequenz f_{R} des Schwingungsabschnitts 3 Werkstoffabtrag, der beispielsweise die Form einer der Ausnehmungen 8, 11 oder 12 aufweisen kann, und zur Erhöhung der Resonanzfrequenz f_{R} beispielsweise ein Werkstoffauftrag vorgenommen.

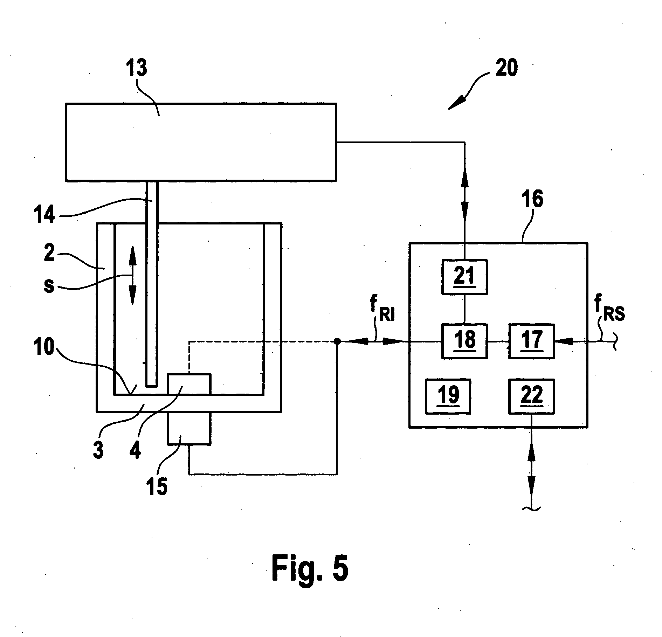

Den Zusammenhang zwischen Resonanzfrequenz f_{R} und Tiefe s einer Ausnehmung, zum Beispiel der Ausnehmung 8, stellt Fig. 4 beispielhaft bei einem Gehäuse 2 im Anlieferzustand mit einer bestimmten Beschichtung dar. Die Resonanzfrequenz f_{R} ist auf der Ordinate und die Tiefe s auf der Abszisse aufgetragen. Es sind drei verschiedene Kurven gl...3 aus verschiedenen Versuchen gezeigt, welche relativ linear verlaufen. Der Bereich der gemessenen Frequenzen liegt zwischen 52 kHz und 54 kHz. Je tiefer die Ausnehmung 8 ist, je niedriger ist die Resonanzfrequenz f_{R}. Ein fertig hergestellter Sensor weist zum Beispiel eine Resonanzfrequenz von 48 kHz +2 kHz/-1,5 kHz auf. Die Messdaten in Fig. 4 betreffen einen noch nicht fertig hergestellten Sensor. Anhand von Fig. 4 ist leicht vorstellbar, dass nach Fertigstellung die Kurven g1, g2 und g3 zu niedrigeren Frequenzen hin parallel verschoben sind, so dass der Toleranzbereich des fertig hergestellten Sensors eingehalten wird. Aus diesem Zusammenhang kann eine korrespondierende Tiefe s einer Ausnehmung ermittelt werden, die dann als Zustellweg zs eines Bearbeitungswerkzeugs zur Erstellung der Ausnehmung 8 betrachtet dient. So lassen sich Bearbeitungsvorschriften für beschichtete und auch unbeschichtete Gehäuse 2 ableiten und anhand der verwendeten Werkstoffe zum Beispiel in Tabellen aufstellen, welche für ein Verfahren zum Einstellen der Resonanzfrequenz f_{R} von Schwingungsabschnitten 3 in einer Vorrichtung 20 verwendet werden können, die in Fig. 5 gezeigt ist.

Die Vorrichtung 20 weist eine Bearbeitungseinrichtung 13 mit einem Werkzeug 14, beispielsweise ein Fräser, für das Gehäuse auf, welches in einer nicht dargestellten Haltevorrichtung bei der Bearbeitung gehalten wird. Das Werkzeug 14 ist in den Innenraum des Gehäuses 2 zur Bearbeitung der Innenfläche 10 des Schwingungsabschnitts 3 eingeführt. Es kann Bewegungen in der Ebene des Schwingungsabschnitts 3 und senkrecht dazu in der Zustellrichtung zs ausführen.

Anstelle einer Fräsbearbeitung kann auch eine Bearbeitung mit einem Laser mittels eines Laserätzverfahrens erfolgen, wobei das Werkzeug 14 ein Träger für eine Laseroptik ist, deren Laserquelle sich zum Beispiel in der Bearbeitungseinrichtung 13 befindet. Zur Bildung einer Tiefe s einer Ausnehmung wird ein Bearbeitungslaserstrahl zum Beispiel entsprechend fokussiert und in der Intensität eingestellt. Mit dem Laserätzverfahren sind hohe Genauigkeiten erzielbar. Dieses lässt sich beispielsweise auch mit einem Plasmaätzverfahren erreichen, wobei der Aufwand jedoch höher ist. Dabei ist anstelle des Werkzeugs 14 eine entsprechende Verbindung der Bearbeitungseinrichtung 13 mit dem zu bearbeitenden Gehäuse 2 eingesetzt, wobei zusätzliche verfahrensbedingte Maßnahmen getroffen werden müssen, auf die hier nicht eingegangen wird.

Die Bearbeitungseinrichtung 13 ist mit einer Regelungseinrichtung 16 verbunden, an welche eine Messeinrichtung 15 zur Messung der Resonanzfrequenz f_{RI} des zu bearbeitenden Gehäuses 2 angeschlossen ist. Die Messeinrichtung 15 weist zum Beispiel einen Sender und einen Empfänger auf und ist an den Schwingungsabschnitt 3 des Gehäuses 2 vorübergehend anbringbar. In einer anderen Ausführung weist die Messeinrichtung 15 einen Empfänger, und ein im Gehäuse 2 vorübergehend anbringbares oder das schon im Gehäuse 2 angebrachte Wandlerelement 4 als Sender auf, welches über eine Leitung 23 anschließbar ist, was durch die gestrichelte Verbindungslinie angedeutet ist.

Es gibt mehrere Möglichkeiten, die Resonanzfrequenz f_{RI} des zu bearbeitenden Gehäuses 2 zu messen. Der Schwingungsabschnitt 3 wird von dem auf ihm aufgebrachten Wandlerelement 4 angeregt. Die dabei entstehende Schwingung des Schwingungsabschnitts 3 wird von der außen angeordneten Messeinrichtung 15 empfangen. Dabei kann das Wandlerelement 4 ein schon bereits auf dem Schwingungsabschnitt 3 aufgebrachtes und auf diesem verbleibendes oder ein nur für den Mess- und Bearbeitungsvorgang aufbringbares Wandlerelement 4 sein.
Es ist auch möglich, dass nur die Messeinrichtung 15 von außen oder innerhalb des Gehäuses 2 auf den Schwingungsabschnitt 3 vorübergehend aufbringbar ist, wobei sie mit einem eigenen Wandlerelement den Schwingungsabschnitt 3 anregt und mit einem weiteren, eigenen Wandlerelement die dabei entstehende Schwingung misst.
Das Aufbringen der vorübergehend aufbringbaren Elemente kann beispielsweise durch eine mechanische Klemmung erfolgen.

Die Regelungseinrichtung 16 besitzt eine Eingabeeinrichtung 17 zur Eingabe von beispielsweise Sollwerten für eine Soll-Resonanzfrequenz f_{RS}. Weiterhin weist die Regelungseinrichtung 16 eine Vergleichseinrichtung zum Vergleich der gemessenen Resonanzfrequenz f_{RI} mit der Soll-Resonanzfrequenz f_{RS}. Die Sollwerte für verschiedene Bedingungen, das heißt zum Beispiel für unterschiedliche Beschichtungen, sind vorgebbar in einer Speichereinrichtung 19 zum entsprechenden Abruf gespeichert. Gemäß den Vergleichswerten aus der Vergleichseinrichtung 18 und weiterer Werte aus der Speichereinrichtung 19 erfolgt eine Übergabe von Steuerwerten an die Bearbeitungseinrichtung 13 über eine erste Schnittstelle 21. Die Regelungseinrichtung 16 besitzt außerdem eine nicht dargestellte Rechen- und Steuereinheit, welche so ausgebildet ist, dass eine geregelte Einstellung der Resonanzfrequenz f_{R} des Schwingungsabschnitts 3 durch die Bearbeitungseinheit 13 vorgenommen wird. Zur Einbindung der Vorrichtung 20 in eine Fertigungslinie einer Serienproduktion von Sensoren 1 dient eine zweite Schnittstelle 22 in der Regelungseinrichtung 16. Hiermit ist es möglich, die Regelungseinrichtung 16 mit einer Steuereinheit dieser Fertigungslinie so zu verbinden, dass zum Beispiel eine gegenseitige Anpassung der Fertigungslinie und der Vorrichtung 20 hinsichtlich eines Fördertakts erfolgt, wobei zum Beispiel auch Pufferstationen in Förderrichtung vor oder hinter der Vorrichtung 20 beeinflussbar sein können.

Der Ablauf der Bearbeitung des Gehäuses 2 kann in einem Durchgang ausgeführt werden, indem zuerst die Resonanzfrequenz f_{RI} des Schwingungsabschnitts 3 gemessen wird, wonach ein Vergleich mit der Soll-Resonanzfrequenz f_{RS} erfolgt, der entsprechende Bearbeitungswerte generiert. Diese Bearbeitungswerte können zum Beispiel Tabellenwerte sein, die in der Speichereinrichtung 19 gespeichert sind und für bestimmte Vergleichswerte entsprechende Werte für den Zustellweg zs für das Werkzeug 14 der Bearbeitungseinrichtung 13 bilden. Nach der Bearbeitung kann eine erneute Messung zur Überprüfung der neuen Resonanzfrequenz f_{RI} erfolgen. Daran kann sich bei noch nicht ausreichender Resonanzfrequenz f_{RI} ein neuer Durchgang anschließen.

Weiterhin ist aber auch eine Bearbeitung möglich, bei welcher die oben genannten Schritte in mehreren Durchläufen, beispielsweise mit kleineren Zustellwegen, ausgeführt werden, wodurch sich die Genauigkeit der erzielten Resonanzfrequenz f_{R} erhöht.

Die Erfindung ist nicht auf die oben beschriebenen Ausführungsbeispiele beschränkt, sondern auf vielfältige Art und Weise modifizierbar.

Auch eine Abhängigkeit einer Änderung der Resonanzfrequenz von der Fläche bzw. Flächenform des Werkstoffabtrags ist denkbar. Der Zusammenhang kann durch geeignete Messungen ermittelt werden und in entsprechende Bearbeitungsvorschriften umgesetzt werden.

So ist es beispielsweise denkbar, dass Schwingungsabschnitte 2 ohne aufgebrachtes Wandlerelement 4 bearbeitet werden können, wobei auch der Befestigungsbereich 9 flächig abgetragen werden kann.

Auch ein Auftragen von Zusatzwerkstoff auf die Innenfläche 10 des Schwingungsabschnitts 3 ist möglich. Dazu ist zum Beispiel ein bestimmtes selbst härtendes Kunststoffharz oder ähnliches verwendbar, welches mit einem geeigneten Werkzeug 14 in Gestalt eines Auftragswerkzeugs aufgebracht wird. In diesem Fall werden die Bearbeitungswerte, die zum Zustellen des Werkzeugs 14 vorgesehen sind, durch die Regelungseinrichtung 16 in einer Form erzeugt, die Einstellwerten für eine Auftragsmenge des aufzutragenden Materials entsprechen, und an die Bearbeitungsvorrichtung 13 geleitet, die hierbei eine Bearbeitungsvorrichtung zum Werkstoffauftrag ist.

Weiterhin ist es möglich, dass die Messeinrichtung 15 mit der Bearbeitungseinrichtung 13 gekoppelt ist, wobei auch das Werkzeug 14 zur Einleitung von Schwingungen verwendet werden kann.

Es ist auch denkbar, dass das Bearbeitungswerkzeug 14 nur in Richtung des Zustellwegs zs verfahrbar ist, wobei mehrere Bearbeitungswerkzeuge 14 nur einen Bohrvorgang ausführen.

Das Bearbeitungswerkzeug 14 kann auch ein Laser sein.

Das Beschichten ist auch nach dem Bearbeitungsvorgang möglich.

## Patentansprüche

1. Verfahren zum Einstellen der Resonanzfrequenz (f_{R}) eines Schwingungsabschnitts (3) eines Gehäuses (2) eines Sensors (1), insbesondere eines Ultraschallsensors, wobei das Verfahren folgende Verfahrensschritte aufweist:
(VS1) Messen der Resonanzfrequenz (f_{RI}) des Schwingungsabschnitts (3) mit einer Messeinrichtung (15);
(VS2)Vergleichen der gemessenen Resonanzfrequenz (f_{RI}) mit einem vorher festgelegten Schwellwert einer Soll-Resonanzfrequenz (f_{RS}); und
(VS3) Herstellen eines Werkstoffabtrags von oder Zusatzwerkstoffauftrags auf den Schwingungsabschnitt (3) anhand des Vergleichens zum Einstellen der Resonanzfrequenz (f_{R}) des Schwingungsabschnitts (3).

2. Verfahren nach Anspruch 1,
**dadurch gekennzeichnet,**
**dass** der Werkstoffabtrag oder -auftrag an dem Schwingungsabschnitt (3) im Inneren des Gehäuses (2) erfolgt.

3. Verfahren nach Anspruch 2, wobei der Schwingungsabschnitt (3) des Gehäuses (2) des Sensors (1) an der Außenseite des Gehäuses (2) eine Beschichtung (7) aufweist.

4. Verfahren nach einem der Ansprüche 1 bis 3,
**dadurch gekennzeichnet,**
**dass** das Messen der Resonanzfrequenz (f_{R}) mit einem Sender und einem Empfänger einer an dem Schwingungsabschnitt (3) angebrachten Messeinrichtung (15) erfolgt.

5. Verfahren nach einem der Ansprüche 1 bis 3,
**dadurch gekennzeichnet,**
**dass** das Messen der Resonanzfrequenz (f_{R}) mit einem Wandlerelement (4) als Sender, das auf dem Schwingungsabschnitt (3) vorübergehend aufgebracht oder auf dem Schwingungsabschnitt (3) befestigt ist, und einem Empfänger einer an dem Schwingungsabschnitt (3) vorübergehend angebrachten Messeinrichtung (15) erfolgt.

6. Verfahren nach einem der Ansprüche 1 bis 5,
**dadurch gekennzeichnet,**
**dass** das Herstellen des Werkstoffabtrags oder -auftrags außerhalb eines Befestigungsbereichs (9) eines Wandlerelementes (4) erfolgt.

7. Verfahren nach einem der Ansprüche 1 bis 6,
**dadurch gekennzeichnet,**
**dass** das Herstellen des Werkstoffabtrags oder -auftrags mit einem Werkzeug (14) erfolgt, welches eine Verstellbewegung parallel zur Ebene des Schwingungsabschnitts (3) in einer in Abhängigkeit von dem Vergleich zwischen der gemessenen Resonanzfrequenz (f_{RI}) und Soll-Resonanzfrequenz (f_{RI}, f_{RS}) festlegbaren Form ausführt.

8. Verfahren nach Anspruch 7,
**dadurch gekennzeichnet,**
**dass** das jeweilige Werkzeug (14) in Abhängigkeit von dem Vergleich zwischen der gemessenen Resonanzfrequenz (f_{RI}) und Soll-Resonanzfrequenz (f_{RI}, f_{RS}) in einer Richtung zugestellt wird, die im Wesentlichen senkrecht zur Ebene des Schwingungsabschnitts (3) liegt.

9. Verfahren nach Anspruch 7 oder 8,
**dadurch gekennzeichnet,**
**dass** das Herstellen des Werkstoffabtrags durch ein Fräsverfahren erfolgt.

10. Verfahren nach Anspruch 7 oder 8,
**dadurch gekennzeichnet,**
**dass** das Herstellen des Werkstoffabtrags durch ein Laserätzverfahren erfolgt.

11. Verfahren nach Anspruch 7 oder 8,
**dadurch gekennzeichnet,**
**dass** das Herstellen des Werkstoffabtrags durch ein Plasmaätzverfahren erfolgt.

12. Verfahren nach einem der Ansprüche 1 bis 11,
**dadurch gekennzeichnet,**
**dass** das Verfahren durch Wiederholen der Verfahrensschritte (VS1 bis VS3) in mehreren Stufen durchgeführt wird.

13. Vorrichtung (20) zur Einstellung der Resonanzfrequenz (f_{R}) eines Schwingungsabschnitts (3) eines Gehäuses (2) eines Sensors (1), insbesondere eines Ultraschallsensors, wobei die Vorrichtung (20) Folgendes aufweist:
- eine Bearbeitungseinrichtung (13) zur Bearbeitung des Schwingungsabschnitts (3), wobei die Bearbeitungseinrichtung (13) eine Einrichtung zur Abtragung von Werkstoff von dem Schwingungsabschnitt (3) und/oder eine Einrichtung zur Auftragung eines Zusatzwerkstoffs auf den Schwingungsabschnitt (3) aufweist;
- eine Messeinrichtung (15) zur Messung der Resonanzfrequenz (f_{RI}) des Schwingungsabschnitts (3); und
- eine Regelungseinrichtung (16) zur Regelung der Bearbeitungseinrichtung (13) zur Einstellung der Resonanzfrequenz (f_{R}) des Schwingungsabschnitts (3).

14. Vorrichtung (20) nach Anspruch 13,
**dadurch gekennzeichnet,**
**dass** ein auf dem Schwingungsabschnitt (3) befestigtes Wandlerelement (4) ein Bestandteil der Messeinrichtung (15) ist.

15. Vorrichtung (20) nach einem der Ansprüche 13 bis 14,
**dadurch gekennzeichnet,**
**dass** die Regelungseinrichtung (16) Folgendes aufweist:
- eine Eingabeeinrichtung (17) zur Eingabe von Werten;
- eine Vergleichseinrichtung (18) zum Vergleich von gemessenen Werten der Resonanzfrequenz (f_{RI}) mit Werten einer Soll-Resonanzfrequenz-(f_{RS});
- eine Speichereinrichtung (19) für Sollwerte und vorgebbare Tabellenwerte; und
eine erste Schnittstelle (21) zur Verbindung mit Bearbeitungseinrichtung (13).

16. Vorrichtung (20) nach Anspruch 15,
**dadurch gekennzeichnet,**
**dass** die Regelungseinrichtung (16) eine zweite Schnittstelle (22) zur Integration der Vorrichtung (20) in eine Fertigungslinie für Ultraschallsensoren aufweist.

## Claims

1. Method for setting the resonant frequency (f_{R}) of an oscillating section (3) of a housing (2) on a sensor (1), in particular of an ultrasound sensor, wherein the method has the following method steps:
(VS1) measurement of the resonant frequency (f_{RI}) of the oscillation section (3) by means of a measurement device (15);
(VS2) comparison of the measured resonant frequency (f_{RI}) with a previously defined threshold value of a nominal resonant frequency (f_{RS}) ; and
(VS3) removal of material or application of additional material to the oscillation section (3) on the basis of the comparison in order to set the resonant frequency (f_{R}) of the oscillating section (3).

2. Method according to Claim 1,
**characterized**
**in that** the removal or application of material to the oscillation section (3) is carried out in the interior of the housing (2).

3. Method according to Claim 2, wherein the oscillating section (3) of the housing (2) of the sensor (1) has a coating (7) on the outside of the housing (2).

4. Method according to one of Claims 1 to 3,
**characterized**
**in that** the resonant frequency (f_{R}) is measured by means of a transmitter and a receiver of a measurement device (15) which is fitted to the oscillating section (3).

5. Method according to one of Claims 1 to 3,
**characterized**
**in that** the resonant frequency (f_{R}) is measured using a transducer element (4) as a transmitter which is temporarily fitted to the oscillating section (3) or is mounted on the oscillating section (3), and by means of a receiver of a measurement device (15), which is temporarily fitted to the oscillating section (3).

6. Method according to one of Claims 1 to 5,
**characterized**
**in that** the material is removed or applied outside an attachment area (9) of a transducer element (4).

7. Method according to one of Claims 1 to 6,
**characterized**
**in that** the material is removed or applied by means of a tool (14) which carries out an adjusting movement parallel to the plane of the oscillating section (3) in a form which can be defined as a function of the comparison between the measured resonant frequency (f_{RI}) and the nominal resonant frequency (f_{RI}, f_{RS}).

8. Method according to Claim 7,
**characterized**
**in that** the respective tool (14) is moved in a direction which is essentially at right angles to the plane of the oscillation section (3), as a function of the comparison between the measured resonant frequency (f_{RI}) and the nominal resonant frequency (f_{RI}, f_{RS}).

9. Method according to Claim 7 or 8,
**characterized**
**in that** the material is removed by a milling process.

10. Method according to Claim 7 or 8,
**characterized**
**in that** the material is removed by a laser etching process.

11. Method according to Claim 7 or 8,
**characterized**
**in that** the material is removed by a plasma etching process.

12. Method according to one of Claims 1 to 11,
**characterized**
**in that** the method is carried out by repeating the method steps (VS1 to VS3) in a plurality of stages.

13. Apparatus (20) for setting the resonant frequency (f_{R}) of an oscillating section (3) of a housing (2) of a sensor (1), in particular of an ultrasound sensor, wherein the apparatus (20) has the following:
- a processing device (13) for processing the oscillating section (3), wherein the processing device (13) has a device for removing material from the oscillating section (3) and/or a device for applying additional material to the oscillating section (3);
- a measurement device (15) for measuring the resonant frequency (f_{RI}) of the oscillating section (3) ; and
- a control device (16) for controlling the processing device (13) for setting the resonant frequency (f_{R}) of the oscillating section (3).

14. Apparatus (20) according to Claim 13,
**characterized**
**in that** a transducer element (4) which is mounted on the oscillating section (3) is a component of the measurement device (15).

15. Apparatus (20) according to one of Claims 13 or 14,
**characterized**
**in that** the control device (16) has the following:
- an input device (17) for inputting values;
- a comparison device (18) for comparison of measured values of the resonant frequency (f_{RI}) with values of a nominal resonant frequency (f_{RS}) ;
- a memory device (19) for nominal values and predeterminable table values; and
a first interface (21) for connection to the processing device (13).

16. Apparatus (20) according to Claim 15,
**characterized**
**in that** the control device (16) has a second interface (22) for integration of the apparatus (20) in a production line for ultrasound sensors.

## Revendications

1. Procédé d'ajustement de la fréquence de résonance (f_{R}) d'une partie oscillante (3) du boîtier (2) d'un détecteur (1), en particulier d'un détecteur d'ultrasons, le procédé présentant les étapes suivantes :
(VS1) mesure de la fréquence de résonance (f_{R1}) de la partie oscillante (3) à l'aide d'un dispositif de mesure (15),
(VS2) comparaison de la fréquence de résonance (f_{R1}) mesurée à une valeur de seuil, définie préalablement, d'une fréquence de résonance de consigne (f_{RS}) et
(VS3) sur base de la comparaison, enlèvement de matière ou apport de matière supplémentaire sur la partie oscillante (3) pour ajuster la fréquence de résonance (f_{R}) de la partie oscillante (3).

2. Procédé selon la revendication 1, **caractérisé en ce que** l'enlèvement ou l'apport de matière sur la partie oscillante (3) ont lieu à l'intérieur du boîtier (2).

3. Procédé selon la revendication 2, dans lequel la partie oscillante (3) du boîtier (2) du détecteur (1) présente un revêtement (7) sur le côté extérieur du boîtier (2).

4. Procédé selon l'une des revendications 1 à 3, **caractérisé en ce que** la mesure de la fréquence de résonance (f_{R}) s'effectue à l'aide d'un émetteur et d'un récepteur d'un dispositif de mesure (15) appliqué sur la partie oscillante (3).

5. Procédé selon l'une des revendications 1 à 3, **caractérisé en ce que** la mesure de la fréquence de résonance (f_{R}) s'effectue à l'aide d'un élément convertisseur (4) qui sert d'émetteur et qui est installé temporairement sur la partie oscillante (3) ou qui est fixé sur la partie oscillante (3) et d'un récepteur d'un dispositif de mesure (15) qui est appliqué temporairement sur la partie oscillante (3).

6. Procédé selon l'une des revendications 1 à 5, **caractérisé en ce que** l'enlèvement ou l'apport de matière s'effectuent à l'extérieur de la partie de fixation (9) d'un élément convertisseur (4).

7. Procédé selon l'une des revendications 1 à 6, **caractérisé en ce que** l'enlèvement ou l'apport de matière s'effectuent à l'aide d'un outil (14) qui exécute un déplacement d'ajustement qui est parallèle au plan de la partie oscillante (3) et dont la forme peut être définie en fonction de la comparaison entre la fréquence de résonance mesurée (f_{R1}) et la fréquence de résonance de consigne (f_{R1}, f_{RS}) .

8. Procédé selon la revendication 7, **caractérisé en ce que** chaque outil (14) est amené dans une direction essentiellement perpendiculaire au plan de la partie oscillante (3) en fonction de la comparaison entre la fréquence de résonance mesurée (f_{R1}) et la fréquence de résonance de consigne (f_{R1}, f_{RS}).

9. Procédé selon les revendications 7 ou 8, **caractérisé en ce que** l'enlèvement de matière s'effectue par une opération de fraisage.

10. Procédé selon les revendications 7 ou 8, **caractérisé en ce que** l'enlèvement de matière s'effectue par une opération de gravure au laser.

11. Procédé selon les revendications 7 ou 8, **caractérisé en ce que** l'enlèvement de matière s'effectue par une opération de gravure au plasma.

12. Procédé selon l'une des revendications 1 à 11, **caractérisé en ce que** le procédé est exécuté par répétition successive des étapes (VS1 à VS3).

13. Dispositif (20) d'ajustement de la fréquence de résonance (f_{R}) d'une partie oscillante (3) du boîtier (2) d'un détecteur (1), en particulier d'un détecteur d'ultrasons, le dispositif (20) présentant :
- un dispositif de traitement (13) qui traite la partie oscillante (3), le dispositif de traitement (13) présentant un dispositif d'enlèvement de matière de la partie oscillante (3) et/ou un dispositif d'apport de matière supplémentaire sur la partie oscillante (3),
- un dispositif de mesure (15) qui mesure la fréquence de résonance (f_{R1}) de la partie oscillante (3) et
- un dispositif de régulation (16) qui régule le dispositif de traitement (13) en vue d'ajuster la fréquence de résonance (f_{R}) de la partie oscillante (3).

14. Dispositif (20) selon la revendication 13, **caractérisé en ce qu'**un élément convertisseur (4) fixé sur la partie oscillante (3) fait partie du dispositif de mesure (15).

15. Dispositif (20) selon l'une des revendications 13 à 14, **caractérisé en ce que** le dispositif de régulation (16) présente :
- un dispositif d'introduction (17) qui permet d'introduire des valeurs,
- un dispositif comparateur (18) qui compare la valeur mesurée de la fréquence de résonance (f_{R1}) à la valeur d'une fréquence de résonance de consigne (f_{RS}),
- un dispositif de mémoire (19) qui conserve les valeurs de consigne et des valeurs prédéterminées dans des tableaux et
- une première interface (21) qui assure la liaison avec le dispositif de traitement (13).

16. Dispositif (20) selon la revendication 15, **caractérisé en ce que** le dispositif de régulation (16) présente une deuxième interface (22) qui permet d'intégrer le dispositif (20) dans une chaîne de fabrication de détecteurs d'ultrasons.
